# EUROPEAN PATENT APPLICATION

(11) **EP 2 636 692 A1**
(43) Date of publication of application: **11.09.2013**
(21) Application number: 11837722.5
(22) Date of filing: 21.10.2011
(51) Int. Cl.: C08G 18/22

(54) **CURABLE URETHANE COMPOSITION, CURED PRODUCT THEREOF, KIT AND CURRED PRODUCT PRODUCTION METHOD**

(30) Priority: 02.11.2010 JP 2010245995
(71) Applicant: Mie University, Mie 514-8507 (JP); Shinshu University, Matsumoto-shi, Nagano 390-8621 (JP)
(72) Inventor: TANAKA, Yoshimi, Tsu-shi Mie 514-8507 (JP); NAKAMURA, Shuhei, Tsu-shi Mie 514-8507 (JP); MURAKAMI, Yasushi, Ueda-shi Nagano 386-8567 (JP); ISHII, Koichiro, Yokkaichi-shi Mie 510-8002 (JP)
(74) Representative: Duckworth, Timothy John
(86) International application number: PCT/JP2011/005907
(87) International publication number: WO 2012/060068

(57) **Abstract**

[Problem]

To provide a curable urethane composition of superior safety and environmental tolerance while also increasing the curing rate thereof.

[Solution]

Present inventions relate a curable urethane composition, a cured product and a kit thereof, which contain (A) an isocyanate group-containing compound, (B) a polyol, and as curing catalysts, (C) a titanium alkoxide and (D) an alpha-hydroxycarboxylic acid ester or beta-hydroxycarboxylic acid ester.

## Description

### Technical Field

The present invention relates to a curable urethane composition, a cured product thereof, a kit, and a method for producing the cured product.

### Background Art

A polyurethane resin is synthesized by a reaction between an isocyanate group-containing compound and a polyol. Polyurethane resins are used in a variety of fields, and for example, in heavy-duty anticorrosives, coating materials, adhesives, sealing materials and the like intended for automobiles, construction, and electric appliances.

When a polyurethane resin is produced, it is common to use a curing catalyst which accelerates the reaction between a polyol and an isocyanate group-containing compound for the purpose of increasing productivity or enhancing characteristics. Well-known examples of the curing catalyst include tertiary amine catalysts or metal-based catalysts (mercury-based catalysts, lead-based catalysts, zinc-based catalysts, tin-based catalysts, and the like). Particularly, dibutyltin dilaurate which is one of organotin-based catalysts is frequently used because the compound is highly active.

However, with regard to the catalyst described above, problems of safety to human body and large environmental load have been raised as an issue, and there is a demand for new catalysts which can substitute the catalyst described above. As substitute catalysts, for example, titanium alkoxide-based catalysts are well known (see Patent Literature 1).

### Citation List

### Patent Literature

Patent Literature 1: JP No. 8-333510 A (claims and the like)

### Summary of Invention

### Technical Problem

Titanium alkoxides are already known as metal alkoxides having a function as a curing catalyst. The final decomposition product of titanium alkoxides obtainable in a conventional environment is titanium dioxide. Titanium dioxide is a highly safe compound that is used even in food additives or cosmetics. However, when a titanium alkoxide-based catalyst is used, the curing rate is low as compared with the case where a tin-based catalyst is used. Therefore, there is a demand for a curable urethane composition containing a catalyst to perform a higher curing rate.

The present invention was made in view of such problems, and it is an object of the invention to provide a curable urethane composition having excellent safety and environmental tolerance, and to increase the curing rate of the curable urethane composition.

### Solution to Problem

In order to achieve the object described above, the inventors of the present invention conducted thorough research by using titanium alkoxides as bases for curing catalysts. As a result, the inventors succeeded in shortening the curing time of a urethane composition, by mixing a titanium alkoxide and an alpha- or beta-hydroxycarboxylic acid ester as curing catalysts, with an isocyanate group-containing compound and a polyol.

That is, the present invention is a curable urethane composition containing (A) an isocyanate group-containing compound, (B) a polyol, and as curing catalysts, (C) a titanium alkoxide, and (D) an alpha- or beta-hydroxycarboxylic acid ester.

Furthermore, the (D) alpha- or beta-hydroxycarboxylic acid ester may be a citric acid ester.

Furthermore, the (C) titanium alkoxide may be titanium tetra-ortho-ethoxide.

Furthermore, according to another aspect of the present invention, there is provided a cured product formed by curing the curable urethane composition described above.

According to still another aspect of the present invention, there is provided a kit containing (A) an isocyanate group-containing compound, (B) a polyol, and as curing catalysts, (C) a titanium alkoxide, and (D) an alpha- or beta-hydroxycarboxylic acid ester, in which the (A) isocyanate group-containing compound and the (B) polyol are separated, and the (C) titanium alkoxide is included, together with the (D) hydroxycarboxylic acid ester, in at least one of (A) and (B), or the (C) titanium alkoxide is separated from (A) and (B).

Furthermore, according to another aspect of the present invention, there is provided a method for producing a cured product, the method including a first mixing step of mixing a titanium alkoxide and an alpha- or beta-hydroxycarboxylic acid ester with an isocyanate group-containing compound; a second mixing step of mixing a polyol into the mixed solution obtained in the first mixing step; and a curing step of curing the composition obtained in the second mixing step.

### Advantageous Effects of Invention

According to the present invention, a curable urethane composition having excellent safety and environmental tolerance is obtained, and also, the curing rate of the curable urethane composition can be increased.

### Brief Description of Drawings

FIG. 1 shows a flow chart illustrating the process flow of the method for preparing a curable urethane composition related to the present embodiment.
FIG. 2 shows a graph illustrating the times each curing time required to cure the respective curable urethane compositions obtained under the conditions of Examples 1 to 9 and Comparative Examples 1 and 2.
FIG. 3 shows a graph illustrating each curing time required to cure the respective curable urethane compositions obtained under the conditions of Examples 10 to 14 and Comparative Example 3.
FIG. 4 shows a graph illustrating each tensile strength of the respective cured products obtained under the conditions of Examples 1 to 4 and Comparative Example 1.
FIG. 5 shows a graph illustrating each tensile strength of the respective cured products obtained under the conditions of Examples 6 to 9 and Comparative Example 2.
FIG. 6 shows a graph illustrating each elongation of the respective cured products obtained under the conditions of Examples 1 to 4 and Comparative Example 1.
FIG. 7 shows a graph illustrating each elongation of the respective cured products obtained under the conditions of Examples 6 to 9 and Comparative Example 2.
FIG. 8 shows a graph illustrating each curing time required to cure the mixture of the curing catalyst-isocyanate group containing compound solution and polyol after keeping the curing catalyst-isocyanate group containing compound solution obtained under the respective conditions of Example 22 and Comparative Examples 11, 12 for a predetermined time period.
FIG. 9 shows a graph illustrating each curing time required to cure the mixture of the curing catalyst-isocyanate group containing compound solution and polyol after keeping the curing catalyst-isocyanate group containing compound solution obtained under the respective conditions of Example 23 and Comparative Examples 13, 14 for a predetermined time period.
FIG. 10 shows a graph illustrating each curing time required to cure the mixture of the curing catalyst-isocyanate group containing compound solution and polyol after keeping the curing catalyst-isocyanate group containing compound solution obtained under the respective conditions of Example 24 and Comparative Examples 15, 16 for a predetermined time period.
FIG. 11 shows a graph illustrating each curing time required to cure the mixture of the curing catalyst-isocyanate group containing compound solution and polyol after keeping the curing catalyst-isocyanate group containing compound solution obtained under the respective conditions of Example 25 and Comparative Examples 17, 18 for a predetermined time period.
FIG. 12 shows a graph illustrating each curing time required to cure the mixture of the curing catalyst-isocyanate group containing compound solution and polyol after keeping the curing catalyst-isocyanate group containing compound solution obtained under the respective conditions of Example 26 and Comparative Examples 19, 20 for a predetermined time period.
FIG. 13 shows a graph illustrating each curing time required to cure the mixture of the curing catalyst-isocyanate group containing compound solution and polyol after keeping the curing catalyst-isocyanate group containing compound solution obtained under the respective conditions of Example 27 and Comparative Examples 21, 22 for a predetermined time period.
FIG. 14 shows a graph illustrating each curing time required to cure the mixture of the curing catalyst-isocyanate group containing compound solution and polyol after keeping the curing catalyst-isocyanate group containing compound solution obtained under the respective conditions of Example 28 and Comparative Examples 23, 24 for a predetermined time period.
FIG. 15 shows a graph illustrating each curing time required to cure the mixture of the curing catalyst-isocyanate group containing compound solution and polyol after keeping the curing catalyst-isocyanate group containing compound solution obtained under the respective conditions of Example 29 and Comparative Examples 25, 26 for a predetermined time period.
FIG. 16 shows a graph illustrating each curing time required to cure the mixture of polyol and the curing catalyst-isocyanate group containing compound solution obtained under the respective conditions of Examples 30 to 33 and Comparative Example 27.
FIG. 17 shows a graph illustrating each curing time required to cure the mixture of polyol and the curing catalyst-isocyanate group containing compound solution obtained under the respective conditions of Examples 34 to 38 and Comparative Example 28.

### Description of Embodiments

Next, preferable embodiments of the curable urethane composition of the present invention, a cured product thereof, a kit, and a method for producing the cured product will be described.

### 1. Curable urethane composition

The curable urethane composition related to the present embodiment primarily includes the following components (A), (B), (C) and (D):
(A) an isocyanate group-containing compound;
(B) a polyol;
(C) a titanium alkoxide; and
(D) a hydroxycarboxylic acid ester.
The components (A) to (D) will be respectively described below.

### (A) Isocyanate group-containing compound

As for the isocyanate group-containing compound that can be used in present embodiment, any publicly known compounds that are capable of synthesizing polyurethane can be used. Particularly, an isocyanate group-containing compound which is highly compatible with polyols and can be cured at room temperature is preferably used. Furthermore, regarding the isocyanate group-containing compound, any polyisocyanate group-containing compound having two or more NCO groups in a molecule, can be more preferably used. Examples thereof include aromatic polyisocyanates such as TDI (for example, 2,4-tolylene diisocyanate (2, 4-TDI) and 2, 6-tolylene diisocyanate (2, 6-TDI)), MDI (for example, 4, 4'-diphenylmethane diisocyanate (4, 4'-MDI) and 2, 4'-diphenylmethane diisocyanate (2, 4'-MDI)), 1,4-phenylene diisocyanate, polymethylene polyphenylene polyisocyanate, xylylene diisocyanate (XDI), tetramethylxylene diisocyanate (TMXDI), tolidine diisocyanate (TODI), 1,5-naphthalene diisocyanate (NDI), and triphenylmethane triisocyanate; aliphatic polyisocyanates such as hexamethylene diisocyanate (HDI), trimethylhexamethylene diisocyanate (TMHDI), lysine diisocyanate, and norbornane diisocyanate methyl (NBDI); alicyclic polyisocyanates such as trans-cyclohexane-1, 4-diisocyanate, isophorone diisocyanate (IPDI), bis(isocyanatomethyl)cyclohexane (H₆XDI), and dicyclohexylmethane diisocyanate (H₁₂MDI); carbodiimide-modified polyisocyanates of the various polyisocyanates described above, or isocyanurate-modified polyisocyanates thereof. These may be used singly, or two or more kinds may also be used in combination.

Among these, XDI, TDI, MDI, TMHDI, NDI, H₆XDI, H₁₂MDI, TMXDI, HDI, IPDI, and NBDI as isocyanate group-containing compounds are preferably used because these compounds are easily available. Among them, XDI, TDI, MDI, TMXDI, and HDI are more preferred because these compounds are relatively inexpensive. Furthermore, XDI, TDI and MDI are preferred because these compounds are highly reactive. In the present invention, the various polyisocyanate group-containing compounds that are mentioned as preferable examples for such reasons may be used singly or in combination of two or more kinds.

The mixing amount of the polyol and the isocyanate group-containing compound in the curable composition is not particularly limited, but the isocyanate index (the isocyanate index refers to [number of (-OH) groups carried by the polyol] / [number of isocyanate groups (-NCO) in the isocyanate group-containing compound]) is usually in the range of 0.5 to 2.5, and more preferably in the range of 0. 7 to 1. 5. When the isocyanate index is 0.7 or higher, the crosslinking density more increases, and the resin strength is higher. When the isocyanate index is 1.5 or less, since it is difficult for unreacted isocyanate groups to remain unreacted, the properties of the cured product do not easily change.

### (B) Polyol

As for the polyol used in the present embodiment, any diol containing two hydroxyl groups, or any polyol containing three or more hydroxyl groups can be used without any particular limitations. For example, polyether-based, polyester-based, polycarbonate-based, acrylic-based, polybutadiene-based, or polyolefin-based polyols; and polyols such as caprolactone-modified polyols, polyester amide polyols, polyurethane polyols, epoxy polyols, epoxy-modified polyols, alkyd-modified polyols, castor oil, and fluorine-containing polyols, may be used singly, or these may be used in combination. The average molecular weight (Mw) of the polyol is preferably in the range of 200 to 10,000. When the average molecular weight of the polyol is 200 or greater, a cured product with high flexibility can be obtained. When the average molecular weight of the polyol is 10, 000 or less, a cured product with high hardness can be obtained.

Here, specific examples of polyether-based polyols include polyols obtained by using, as starting raw materials, compounds having at least two or more active hydrogen groups, such as polyhydric alcohols such as ethylene glycol, propylene glycol, butylenes glycol, tetramethylene glycol, glycerin, trimethylolpropane, pentaerythritol, sorbitol, and sucrose; aliphatic amine compounds such as ethylenediamine; aromatic amine compounds such as toluenediamine and diphenylmethane-4,4-diamine; and alkanolamines such as ethanolamine and diethanolamine, and adding alkylene oxides represented by ethylene oxide, propylene oxide, butylenes oxide, or polyoxytetramethylene oxide.

Specific examples of polyester-based polyols include condensation polymers of at least one selected from ethylene glycol, propylene glycol, butanediol, pentanediol, hexanediol, glycerin, 1,1,1-trimethylolpropane and other low molecular weight polyols, and at least one selected from glutaric acid, adipic acid, pimelic acid, suberic acid, sebacic acid, dimer acid, and other low molecular weight aliphatic carboxylic acids and oligomer acids; and ring-opened polymers of propionlactone and valerolactone.

Examples of other polyols include polymer polyols, polycarbonate polyols; polybutadiene polyol; hydrogenated polybutadiene polyol; acrylic polyol; and low molecular weight polyols such as ethylene glycol, diethylene glycol, propylene glycol, dipropylene glycol, butanediol, pentanediol, and hexanediol.

### (C) Titanium alkoxide

Titanium alkoxide is one of so-called curing catalysts. Examples of titanium alkoxide include titanium tetramethoxide, titanium tetraethoxide, titanium tetraaryloxide, titanium tetra-n-propoxide, titanium tetraisopropoxide, titanium tetra-n-butoxide, titanium tetraisobutoxide, titanium tetra-sec-butoxide, titanium tetra-t-butoxide, titanium tetra-n-pentyloxide, titanium tetracyclopentyloxide, titanium tetrahexyloxide, titanium tetracyclohexyloxide, titanium tetrabenzyloxide, titanium tetraoctyloxide, titanium tetrakis(2-ethylhexyloxide), titaniumtetradecyloxide, titanium tetradodecyloxide, titanium tetrastearyloxide, titanium tetrabutoxide dimer, titanium tetrakis(8-hydroxyoctyloxide), titanium diisopropoxide bis(2-ethyl-1,3-hexanediolate), titanium bis(2-ethylhexyloxy)bis(2-ethyl-1,3-hexanediolate), titanium tetrakis(2-chloroethoxide), titanium tetrakis(2-bromoethoxide), titanium tetrakis(2-methoxyethoxide), titanium tetrakis(2-ethoxyethoxide), titanium butoxide trimethoxide, titanium dibutoxide dimethoxide, titanium butoxide triethoxide, titanium dibutoxide diethoxide, titanium butoxide triisopropoxide, titanium dibutoxide diisopropoxide, titanium tetraphenoxide, titanium tetrakis(o-chlorophenoxide), titanium tetrakis(m-nitrophenoxide), titanium tetrakis(p-methylphenoxide), and titanium tetrakis(trimethylsilyloxide). These may be used singly, or a plurality of kinds may also be used together. Among these, a titanium alkoxide containing an alkoxide group having 1 to 12 carbon atoms is preferred, and a titanium alkoxide containing an alkoxide group having 1 to 6 carbon atoms is more preferred. Furthermore, oligomers thereof can also be used. Preferred examples of the titanium alkoxide include titanium tetraethoxide, titanium tetra-ortho-ethoxide, titanium tetraisopropoxide, and titanium tetrabutoxide, and among them, titanium tetraethoxide is preferred. From the viewpoints of easy handleability, easy availability and curability, titanium tetraisopropoxide, titanium tetra-n-butoxide, and titanium tetra-t-butoxide are preferred.

The titanium alkoxide is preferably included in the composition in an amount in the range of 0.005 parts to 5 parts by mass, more preferably 0.01 parts to 2 parts by mass, and even more preferably 0.01 parts to 1 part by mass, relative to 100 parts by mass of the polyol. In addition, since curable urethane compositions have conspicuous differences in the curing rate depending on the combination of the polyol and the diisocyanate group-containing compound that are mixed, the amount of the titanium alkoxide required varies with the composition ratio of the curable urethane composition. If the amount of the titanium alkoxide is too small, it is difficult for the curable composition to cure. On the other hand, if the amount of the titanium alkoxide is too large, the curing rate is so high that curing occurs during mixing. Therefore, control and handling of the curing reaction becomes difficult, or inconvenience such as a performance decrement of properties of the cured product occurs.

### (D) alpha- or beta-Hydroxycarboxylic acid ester

The alpha- or beta-hydroxycarboxylic acid ester is a product resulting from an ester reaction between a hydroxycarboxylic acid having 3 to 6 carbon atoms and an alcohol having 1 to 20 carbon atoms. Furthermore, an alpha-hydroxycarboxylic acid ester refers to a hydroxycarboxylic acid ester in which a hydroxyl group is bonded to the carbon atom to which an ester group is bonded. A beta-hydroxycarboxylic acid ester refers to a hydroxycarboxylic acid ester in which a hydroxyl group is bonded to a carbon atom that is bonded to the carbon atom to which an ester group is bonded. Hereinafter, in the present specification, in the case of indicating at least one of the alpha-hydroxycarboxylic acid ester and the beta-hydroxycarboxylic acid ester, the ester is simply referred to as a "hydroxycarboxylic acid ester". As the hydroxycarboxylic acid, for example, monocarboxylic acids such as lactic acid and glyceric acid; dicarboxylic acids such as malic acid and tartaric acid; and tricarboxylic acids such as citric acid can be used. As the alcohol, for example, aliphatic saturated alcohols such as methyl alcohol, ethyl alcohol, n-propyl alcohol, i-propyl alcohol, n-butyl alcohol, i-butyl alcohol, tert-butyl alcohol, pentyl alcohol, hexyl alcohol, heptyl alcohol, octyl alcohol, nonyl alcohol, decyl alcohol, laurel alcohol, myristyl alcohol, palmityl alcohol, and stearyl alcohol can be used. Examples of the hydroxycarboxylic acid ester include aliphatic alpha-hydroxycarboxylic acid esters and aromatic alpha-hydroxycarboxylic acid esters. Examples of the aliphatic alpha-hydroxycarboxylic acid esters include hydroxyacetic acid alkyl esters, hydroxyacetic acid aryl esters, lactic acid alkyl esters, lactic acid aryl esters, 2-hydroxybutyric acid alkyl esters, 2-hydroxybutyric acid aryl esters, 2-hydroxyvaleric acid alkyl esters, 2-hydroxyvaleric acid aryl esters, 3-methyl-2-hydroxyvaleric acid alkyl esters, 3-methyl-2-hydroxyvaleric acid aryl esters, 2-hydroxyhexanoic acid alkyl esters, 2-hydroxyhexanoic acid aryl esters, leucic acid alkyl esters, leucic acid aryl esters, malic acid dialkyl esters, malic acid aryl esters, citric acid trialkyl esters, citric acid triaryl esters, isocitric acid trialkyl esters, isocitric acid triaryl esters, tartaric acid dialkyl esters, and tartaric acid diaryl esters. Examples of the aliphatic beta-hydroxycarboxylic acid esters include 3-hydroxypropionic acid alkyl esters, 3-hydroxypropionic acid aryl esters, 3-hydroxybutyric acid alkyl esters, 3-hydroxybutyric acid aryl esters, 3-hydroxyvaleric acid alkyl esters, 3-hydroxyvaleric acid aryl esters, 3-hydroxyhexanoic acid alkyl esters, 3-hydroxyhexanoic acid aryl esters, 3-hydroxyisovaleric acid alkyl esters, 3-hydroxyisovaleric acid aryl esters, 3-hydroxyoctanoic acid alkyl esters, 3-hydroxyoctanoic acid aryl esters, 3-hydroxy-2-(hydroxymethyl)acrylic acid alkyl esters, and 3-hydroxy-2-(hydroxymethyl)acrylic acid aryl esters.

As the aliphatic hydroxycarboxylic acid esters, more preferably a malic acid ester, a citric acid ester, a lactic acid ester, a tartaric acid ester, a glycol monoester, a glycerin monoester, a glycerin diester, and a ricinolic acid ester can be used. Particularly, it is preferable to use a malic acid ester, a citric acid ester, a lactic acid ester, or a tartaric acid ester, and among them, it is more preferable to use a citric acid ester.

In the case of using a citric acid ester, triethyl citrate, tripropyl citrate, tributyl citrate, tri-2-ethylhexyl citrate, acetyltriethyl citrate, acetyltripropyl citrate, acetyltributyl citrate, and acetyltri-2-ethylhexyl citrate can be preferably used. Among them, it is preferable to use tributyl citrate or triethyl citrate in particular.

Furthermore, in the case of using a malic acid ester, it is preferable to use a malic acid dialkyl ester in particular. As the malic acid dialkyl ester, malic acid dimethyl ester, malic acid diethyl ester, malic acid dipropyl ester, malic acid dibutyl ester, malic acid dihexyl ester, acetylmalic acid dioctyl ester, malic acid monoethyl monooctyl ester, and the like can be preferably used, and among them, particularly, malic acid diethyl ester and malic acid dibutyl ester are preferably used.

On the other hand, as the aromatic alpha-hydroxycarboxylic acid ester, a hydroxybenzoic acid ester, a hydroxyphenylacetic acid ester, a hydroxycinnamic acid ester, a benzoic acid ester, and the like can be preferably used.

Regarding the content of the hydroxycarboxylic acid ester, it is preferable that the hydroxycarboxylic acid ester is included in the composition in an amount in the range of from 0.005 parts to 5 parts by mass, preferably 0.01 parts to 2 parts by mass, and more preferably 0.01 parts to 1 part by mass, relative to 100 parts by mass of the polyol. Furthermore, it is preferable that the hydroxycarboxylic acid ester is included in the composition in an amount in the range of 0.25 moles to 2 moles or less, and more preferably in the range of 0.5 moles to 1.5 moles, relative to 1 mole of the titanium alkoxide. The total amount of the titanium alkoxide and the hydroxycarboxylic acid ester is included in the range of 0.01 parts to 10 parts by mass, preferably 0.02 parts to 4 parts by mass, and more preferably 0.02 parts to 2.0 parts by mass, relative to 100 parts by mass of the polyol.

The curable urethane composition having the composition described above can cure the isocyanate group-containing compound and the polyol in a shorter time by incorporating both a titanium alkoxide and a hydroxycarboxylic acid ester, as compared with the case of incorporating only a titanium alkoxide.

### 2. Kit

The kit related to the present embodiment includes the following components (A) to (D):
(A) an isocyanate group-containing compound;
(B) a polyol (stored separately from the component (A));
(C) a titanium alkoxide; and
(D) an alpha- or beta-hydroxycarboxylic acid ester.
Furthermore, the (C) titanium alkoxide may be included, together with the component (D), in at least one of the component (A) and the component (B), or the (C) titanium alkoxide may be stored separately from the components (A) and (B).

The isocyanate group-containing compound and the polyol in the kit are separately stored so as not to be mixed until the time of use. Both the titanium alkoxide and the hydroxycarboxylic acid ester may be included in any one of the isocyanate group-containing compound side or the polyol side, or may be included in both sides. Furthermore, only the hydroxycarboxylic acid ester may be included in at least one of the isocyanate group-containing compound and the polyol, and the titanium alkoxide may be separately stored from the isocyanate group-containing compound and the polyol. Furthermore, the titanium alkoxide and the hydroxycarboxylic acid ester may be stored separately from the isocyanate group-containing compound and the polyol.

A solution containing both the titanium alkoxide and the hydroxycarboxylic acid ester mixed in the isocyanate group-containing compound has superior storage stability than a solution containing the titanium alkoxide mixed alone in the isocyanate group-containing compound. The isocyanate group-containing compound has higher reactivity than the polyol, and when a curing catalyst is dissolved in the isocyanate group-containing compound, this curing catalyst-isocyanate group-containing compound solution may be denatured. However, when both the titanium alkoxide and the hydroxycarboxylic acid ester are incorporated into the curing catalyst-isocyanate group-containing compound solution, the solution can be stored for a certain time period without having the isocyanate group-containing compound cured, or having a precipitate produced therein. Furthermore, a curable urethane composition prepared by leaving a solution in which a titanium alkoxide and a hydroxycarboxylic acid ester are dissolved in an isocyanate group-containing compound for a predetermined time, and then mixing the solution with a polyol, has a shorter curing time as compared with a curable urethane composition prepared by incorporating only a titanium alkoxide into an isocyanate group-containing compound, leaving the mixture for a predetermined time, and mixing the mixture with a polyol. That is, even after the titanium alkoxide and the hydroxycarboxylic acid ester are mixed with an isocyanate group-containing compound, and the mixture is stored for a certain time, the curing catalyst capacity does not easily change. Particularly, when tributyl citrate is used as the hydroxycarboxylic acid ester, the curing catalyst-isocyanate group-containing compound solution has superior storage stability.

### 3. Cured product of curable urethane composition and method for producing the cured product

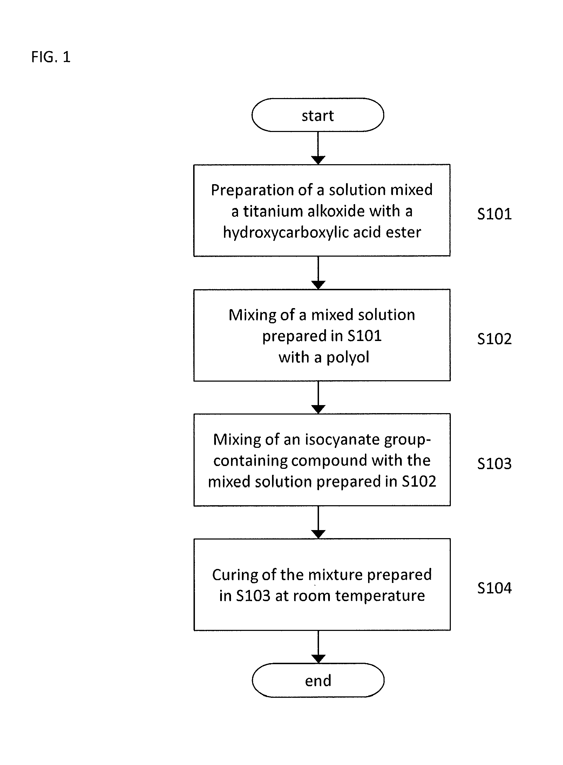

Next, a cured product of the curable composition related to the embodiment and a method for producing the cured product will be explained. FIG. 1 shows a flow chart illustrating the process flow of the method for producing a cured product.

First, a solution in which a titanium alkoxide and a hydroxycarboxylic acid ester are mixed is prepared (Step S101).

The mixed solution prepared in Step S101 is mixed with a polyol (Step S102). It is more preferable that the titanium alkoxide and the hydroxycarboxylic acid ester are incorporated to be contained respectively in an amount of 0.1 parts to 2 parts by mass relative to 100 parts by mass of the polyol. Next, the mixed solution prepared in Step S102 is mixed with an isocyanate group-containing compound (Step S103). The isocyanate group-containing compound is preferably incorporated such that the isocyanate index is in the range of 0.7 to 1.5. Finally, the mixture is cured at room temperature (Step S104). In this manner, a curable urethane composition can be obtained. In addition, the respective steps may be carried out in a heated state, if necessary. The curable composition of the present embodiment has an advantage of being cured more quickly compared with a curable composition in which only a titanium alkoxide is incorporated.

Meanwhile, in the present embodiment, a solution in which a titanium alkoxide and a hydroxycarboxylic acid ester are mixed is prepared, and then a polyol is mixed thereinto; however, the present invention is not limited to such an embodiment. A solution in which a titanium alkoxide and a hydroxycarboxylic acid ester are mixed is prepared, and then the solution is mixed with an isocyanate group-containing compound (first mixing step). Subsequently, the mixture is mixed with a polyol (second mixing step), and a composition thus obtained may be cured (curing step) . Furthermore, an embodiment in which a solution containing a polyol mixed with any one of a titanium alkoxide and a hydroxycarboxylic acid ester is prepared, the other is mixed with an isocyanate group-containing compound, and those solutions are mixed, may also be used. In the case of mixing the titanium alkoxide and the hydroxycarboxylic acid ester with the isocyanate group-containing compound before mixing with the polyol, it is advantageous that the storage stability of the isocyanate group-containing compound is excellent, and the change over time in the curing catalyst capacity is small, as compared with the case of mixing only the titanium alkoxide with the isocyanate group-containing compound.

### Examples

Hereinafter, Examples of the present invention will be described. Meanwhile, the present invention is not limited to below Examples.

First, the compounds used in Examples and Comparative Examples, abbreviations thereof, and methods for preparing various samples will be explained.

### (1) Used compounds and abbreviations thereof

"Titanium alkoxide"
"TTE": Titanium tetra-ortho-ethoxide (manufactured by Merck GmbH)
"TTIP": Titanium tetraisopropoxide (manufactured by Kanto Chemical Co., Inc.)

### [Hydroxycarboxylic acid ester]

"MADB": Dibutyl malate (structural formula of Chemical Formula 1) (manufactured by Tokyo Chemical Industry Co., Ltd.)
"TBC": Tributyl citrate (structural formula of Chemical Formula 2) (manufactured by Tokyo Chemical Industry Co., Ltd.)
"TEC": Triethyl citrate (structural formula of Chemical Formula 3) (manufactured by Tokyo Chemical Industry Co., Ltd.)
"EL": Ethyl lactate (structural formula of Chemical Formula 4) (manufactured by Wako Pure Chemical Industries, Ltd.)
"EHB": Ethyl DL-3-hydroxybutyrate (structural formula of Chemical Formula 5) (manufactured by Tokyo Chemical Industry Co., Ltd.)
"EHS": 2-Ethylhexyl salicylate (structural formula of Chemical Formula 6) (manufactured by Tokyo Chemical Industry Co., Ltd.)

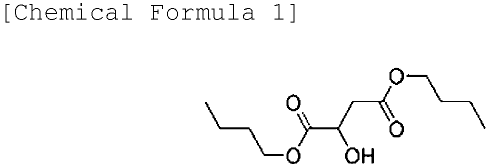

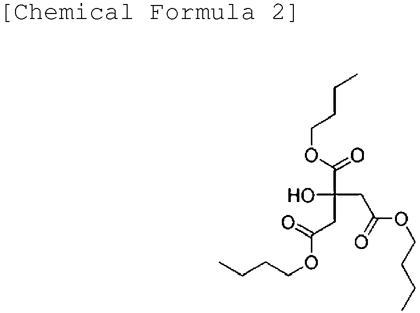

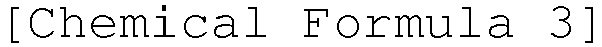

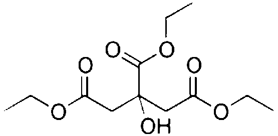

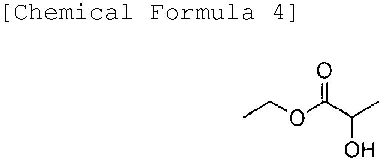

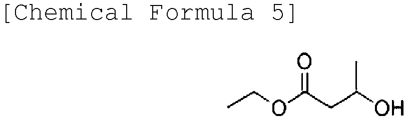

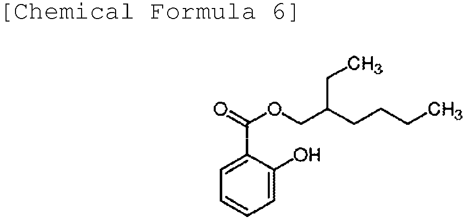

### [Isocyanate group-containing compound]

"HDI": Hexamethylene diisocyanate (structural formula of Chemical Formula 7) (manufactured by Tokyo Chemical Industry Co., Inc.)
"TDI": Tolylene diisocyanate (TDI-80, manufactured by Nippon Polyurethane Industry Co., Ltd.; a mixture containing 80% of 2,4-tolylene diisocyanate (structural formula of Chemical Formula 8) and 20% of 2,6-tolylene diisocyanate (structural formula of Chemical Formula 9))
"IPDI": Isophorone diisocyanate (structural formula of Chemical Formula 10) (manufactured by Sumika Bayer Urethane Co. , Ltd.)

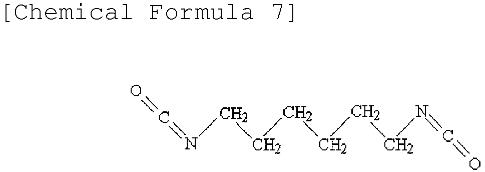

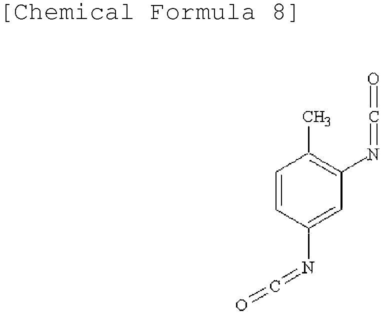

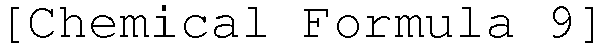

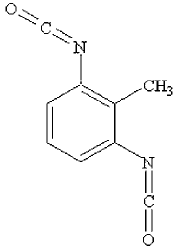

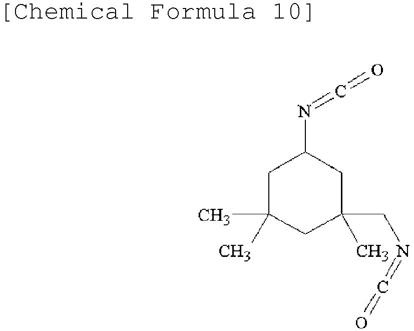

### [Polyol]

"H-102": Castor oil-based polyol (pentafunctional, molecular weight 900, manufactured by Itoh Oil Chemicals Co., Ltd.)
"G-1000": Glycerin-polyether-based polyol (trifunctional, molecular weight 1000, manufactured by Adeka Corp.)
"G-400": Glycerin-polyether-based polyol (trifunctional, molecular weight 400, manufactured by Adeka Corp.)
"F-2010": Adipate-based polyester polyol (trifunctional, molecular weight 2000, manufactured by Kuraray Co., Ltd.)

Next, a method for preparing the curable urethane composition, a method for producing a cured product, and various characteristics evaluations for a curable urethane composition and the cured product will be explained.

### (2) Method for preparing a curable urethane composition

15 g of H-102 as a polyol, and 7.5 g (amount equivalent to an isocyanate index of 1.05) of HDI as an isocyanate group-containing compound were prepared. Furthermore, a titanium alkoxide of 0.15 parts by mass relative to 100 parts by mass of the polyol, and a hydroxycarboxylic acid ester in an amount which gives a molar ratio of 1:1 with respect to the titanium alkoxide, were prepared at the composition described in Table 1. First, the hydroxycarboxylic acid ester was mixed with the titanium alkoxide. The mixed solution of titanium alkoxide and hydroxycarboxylic acid ester thus obtained was mixed with the polyol, and thus a curing catalyst-polyol solution was prepared. Then, the isocyanate group-containing compound was mixed into the curing catalyst-polyol solution, and thus various curable urethane compositions were prepared. Furthermore, curable urethane compositions prepared by changing the order of mixing were also prepared by mixing the mixed solution of titanium alkoxide and hydroxycarboxylic acid ester with HDI to prepare a curing catalyst-HDI solution, and then mixing the solution with the polyol.

**[Table 1]**

| | Titanium alkoxide | Hydroxycarboxylic acid ester |
|---|---|---|
| Examples 1, 10 | TTE | MADB |
| Examples 2, 11 | TTE | TBC |
| Examples 3, 12 | TTE | TEC |
| Examples 4, 13 | TTE | EL |
| Examples 5, 14 | TTIP | EHS |
| Example 6 | TTIP | MADB |
| Example 7 | TTIP | TBC |
| Example 8 | TTIP | TEC |
| Example 9 | TTIP | EL |
| Comp. 1, 3 | TTE | - |
| Comp. 2 | TTIP | - |

### (3) Method for measuring curing time of curable urethane composition

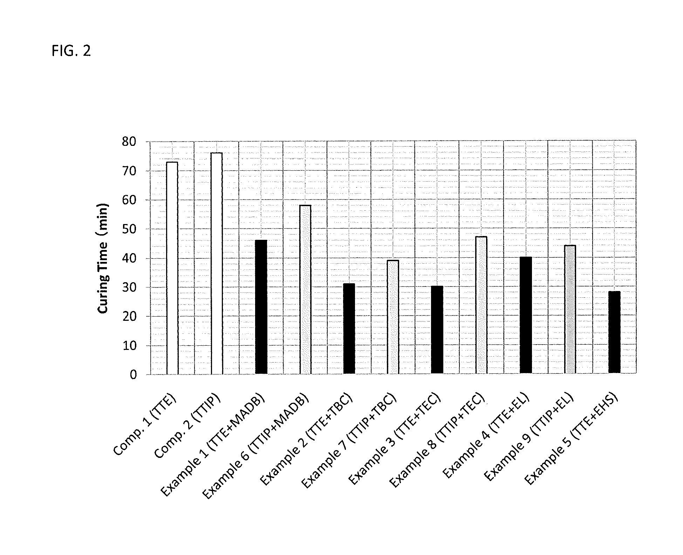

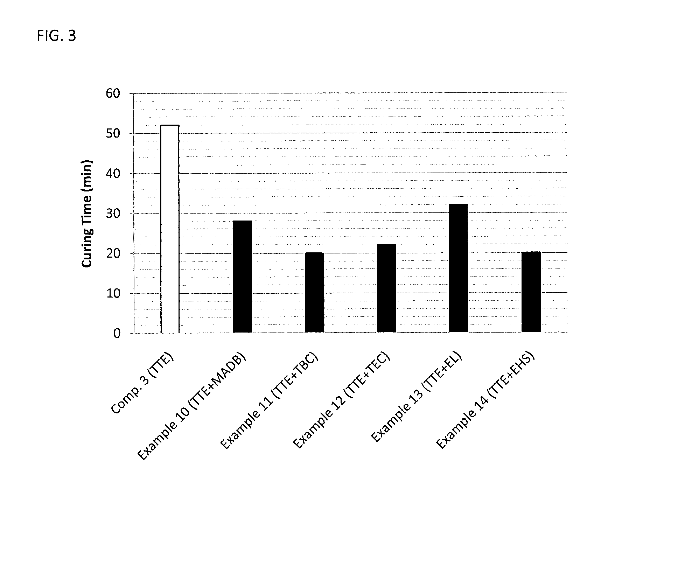

14 g of the mixed solution obtained by mixing the polyol, isocyanate group-containing compound, titanium alkoxide and hydroxycarboxylic acid ester as described above was poured into a Petri dish having a diameter of 10 cm, and this was used as a sample for measuring the mechanical characteristics of the cured product that will be described below. The rest of the mixed solution was used to measure the time required for curing. The "curing time" as used in the present Example is defined as a period of time from immediately after the mixing of the isocyanate group-containing compound into the curing catalyst-polyol solution, to a tack-free state (until the mixture does not adhere even when brought into contact). The interval of measurement to the cured state was set to 1 to 5 minutes during the period from the initiation of curing to 1.5 hours, and to 30 minutes to 1 hour during the period from 1.5 hours and on. Furthermore, the results obtained by measuring the curing time taken by each of the curable urethane compositions that was prepared by mixing the titanium alkoxide and the hydroxycarboxylic acid ester with the polyol, and then incorporating the isocyanate group-containing compound thereinto, are shown in FIG. 2. On the other hand, the results obtained by measuring the curing time taken by each of the curable urethane compositions that was prepared by mixing the titanium alkoxide and the hydroxycarboxylic acid ester with the isocyanate group-containing compound, and then incorporating the polyol thereinto, are shown in FIG. 3.

### (4) Method for measuring mechanical characteristics of cured product

In the mixed solution obtained by mixing the polyol, isocyanate group-containing compound, titanium alkoxide and hydroxycarboxylic acid ester as described above, 14 g of the mixed solution that was poured into a Petri dish having a diameter of 10 cm was stored for 7 days from the time of mixing of the isocyanate group-containing compound, and thus the curable urethane composition was cured. Thereby, a sheet-like cured product having at thickness of about 2 mm was obtained. The sheet-like cured product was punched out into a No. 6 dumbbell shape, and this was used as a test specimen for measuring mechanical characteristics.

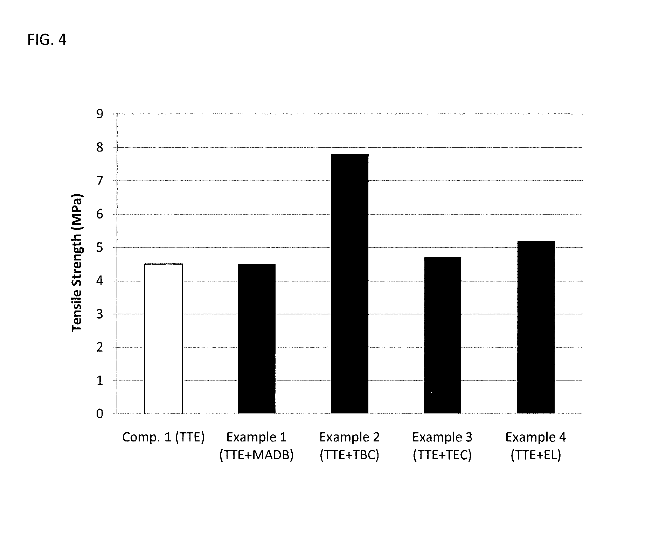

A tensile test was carried out with the dumbbell-shaped specimen, using an Autograph (AGS-J, manufactured by Shimadzu Corp.) based on JIS K6251 at a crosshead speed of 500 mm/min. The tensile strength and elongation were respectively measured by the tensile test, as mechanical characteristics. The tensile strength was determined from the tensile stress at the time when the cured product fractured. The elongation was determined from the rate of elongation in the tensile direction when the cured product fractured, with respect to the specimen before the tensile test. The respective tensile tests were carried out for three specimens in each Example or each Comparative Example. An average value of the three measurement results was designated as the measurement value of the corresponding Example or Comparative Example. The results are shown in FIGS. 4 to 7.

### (5) Measurement results of curing time of curable urethane composition

The results for measuring the curing times of the respective curable urethane composition of Examples 1 to 14 and Comparative Examples 1 to 3 are shown in FIG. 2 and FIG. 3.

### Examples 1 to 5 and Comparative Example 1

In Examples 1 to 5 and Comparative Example 1, a titanium alkoxide and a hydroxycarboxylic acid ester were mixed with a polyol, and then an isocyanate group-containing compound was mixed with the mixture. Furthermore, in Examples 1 to 5, the curing time was measured for various curable urethane compositions in which TTE was used as the titanium alkoxide, and also, the kind of the hydroxycarboxylic acid ester was changed. Comparative Example 1 was different from Examples 1 to 5 in the aspect that the hydroxycarboxylic acid ester was not added, and only TTE was incorporated as the titanium alkoxide. As shown in FIG. 2, all the curable urethane compositions of Examples 1 to 5 showed shorter curing time than the curable urethane composition of Comparative Example 1 in which no hydroxycarboxylic acid ester was added.

### Examples 6 to 9 and Comparative Example 2

In Examples 6 to 9 and Comparative Example 2, various curable urethane compositions were prepared by the same mixing method as that used in Examples 1 to 5 and Comparative Example 1, while using TTIP as the titanium alkoxide, and also changing the kind of the hydroxycarboxylic acid ester. After that, each curing time was measured. Comparative Example 2 was different from Examples 6 to 9 in the aspect that no hydroxycarboxylic acid ester was added, and only TTIP was incorporated as the titanium alkoxide. As shown in FIG. 2, all the curable urethane compositions of Examples 6 to 9 showed shorter curing time than the curable urethane composition of Comparative Example 2 in which no hydroxycarboxylic acid ester was added.

### Examples 10 to 14 and Comparative Example 3

Examples 10 to 14 and Comparative Example 3 have the same compositions as Examples 1 to 5 and Comparative Example 1, respectively, but are different from Examples 1 to 5 and Comparative Example 1 in the aspect that a mixing method of preparing a curing catalyst-isocyanate group-containing compound solution in which the mixture solution of titanium alkoxide and hydroxycarboxylic acid ester was mixed with the isocyanate group-containing compound, and then mixing the solution with the polyol, was used. As shown in FIG. 3, all the curable urethane compositions of Examples 10 to 14 showed shorter curing time than the curable urethane composition of Comparative Example 3 in which no hydroxycarboxylic acid ester was added. When compared with Examples 1 to 5 shown in FIG. 2, the respective samples of Examples 10 to 14 showed shorter curing time than the respective samples of Examples 1 to 5.

### (6) Measurement results of tensile strength of cured product

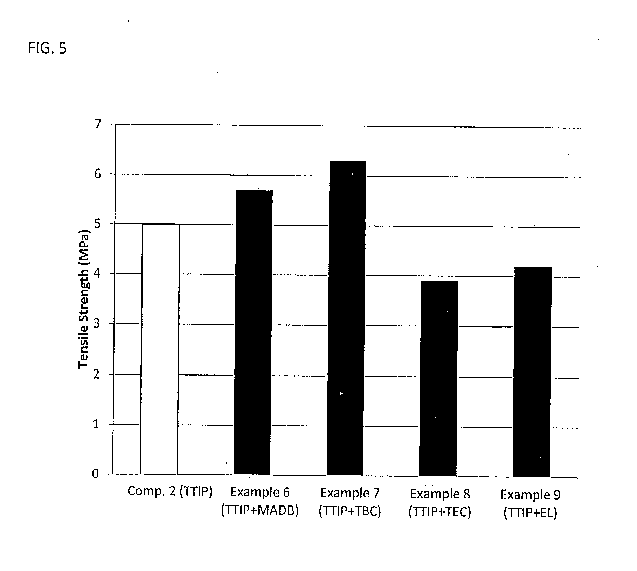

A tensile test was carried out for the cured products of Examples 1 to 4 and Comparative Example 1, and the tensile strengths thus obtained are shown in FIG. 4. Furthermore, a tensile test was carried out for the cured products of Examples 6 to 9 and Comparative Example 2, and the tensile strengths thus obtained are shown in FIG. 5.

### Examples 1 to 4 and Comparative Example 1

As shown in FIG. 4, all the cured products of Examples 1 to 4 had high tensile strengths that were equal to or higher than the tensile strength of the cured product of Comparative Example 1 in which no hydroxycarboxylic acid ester was added.

### Examples 6 to 9 and Comparative Example 2

As shown in FIG. 5, the cured products obtained by curing the respective curable urethane compositions of Example 6 in which MADB was used as the hydroxycarboxylic acid ester and Example 7 in which TBC was used as the hydroxycarboxylic acid ester, had higher tensile strength than that of the cured product of Comparative Example 2 in which no hydroxycarboxylic acid ester was added. On the other hand, the cured products obtained by curing the respective curable urethane compositions of Example 8 in which TEC was used as the hydroxycarboxylic acid ester and Example 9 in which EL was used as the hydroxycarboxylic acid ester, had lower tensile strength than that of the cured product of Comparative Example 2 in which no hydroxycarboxylic acid ester was added.

### (7) Measurement results of elongation of cured product

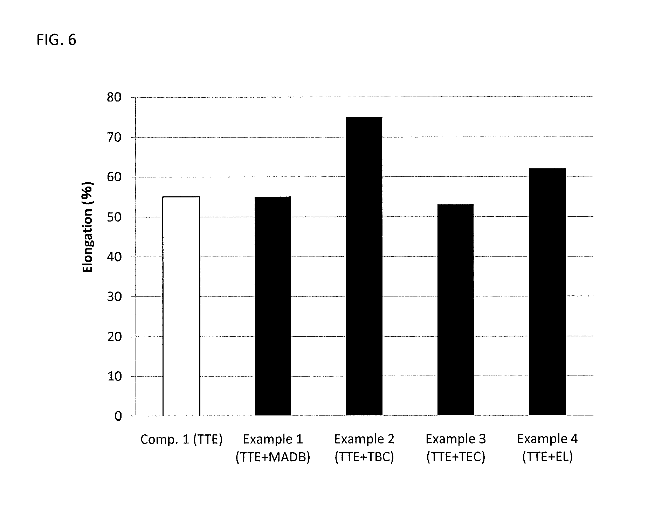

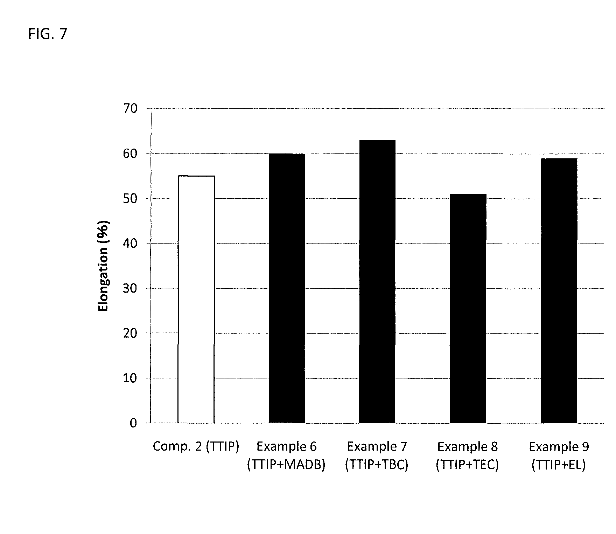

A tensile test was carried out for the cured products of Examples 1 to 4 and Comparative Example 1, and the elongations thus obtained are shown in FIG. 6. Furthermore, a tensile test was carried out for the cured products of Examples 6 to 9 and Comparative Example 2, and the elongations thus obtained are shown in FIG. 7.

### Examples 1 to 4 and Comparative Example 1

As shown in FIG. 6, the cured products obtained by curing the respective curable urethane compositions of Examples 1, 2 and 4 had greater elongation than that of the cured product of Comparative Example 1 in which no hydroxycarboxylic acid ester was added. On the other hand, the cured product of Example 3 in which TEC was added as the hydroxycarboxylic acid ester barely stretched out, even less than the cured product of Comparative Example 1.

### Examples 6 to 9 and Comparative Example 2

As shown in FIG. 7, the cured products of the respective curable urethane compositions of Examples 6, 7 and 9 had greater elongation than that of the cured product obtained by curing the curable urethane composition of Comparative Example 2 in which no hydroxycarboxylic acid ester was added. On the other hand, the cured product obtained by curing the curable urethane composition of Example 8 in which TEC was added as the hydroxycarboxylic acid ester did not have greater elongation than that of the cured product of Comparative Example 2.

To summarize the above results, when the curing time, tensile strength and elongation were measured, in the case where a hydroxycarboxylic acid ester was added together with a titanium alkoxide, the curing time was shortened in all of the curable urethane compositions of Examples 1 to 14 as compared with the case of adding only a titanium alkoxide. Particularly, when TBC was added as the hydroxycarboxylic acid ester, the curing time was significantly shortened, and in addition, the tensile strength and elongation were increased.

### (8) Method for measuring storage stability of curing catalyst-isocyanate group-containing compound solution and results thereof

In a nitrogen-purged glove box, curing catalyst-isocyanate group-containing compound solutions were prepared in a screw tube having an inner volume of 13.5 ml, by adding a curing catalyst to an isocyanate group-containing compound at the compositions indicated in Tables 2 to 4. The amount of mixing of the curing catalyst with respect to the isocyanate group-containing compound was set to an expected concentration range used in the production of polyurethanes, and the hydroxycarboxylic acid ester was used in an amount of 1:1 at the molar ratio with respect to TTE. Subsequently, the opening of the screw tube was sealed with a sealing film, and the screw tube was stored at 25°C. A change of the solution was checked with eyes, and the time of production of a solidification product was recorded. The results thus obtained are shown in Tables 2 to 4.

**[Table 2]**

| Isocyanate group-containing compound | HDI | | | | | | |
|---|---|---|---|---|---|---|---|
| Kinds of curing catalyst and the like (Amount of titanium alkoxide or amount of commercially available catalyst or the like relative to 100 parts by mass of HDI; parts by mass) | TTE+TBC (0.2) | TTE+EHB (0.2) | TTE+EHS (0.2) | TTE+TBC (0.08) | TTE ONLY (0.2) | COMMERCIALLY AVAILABLE CATALYST (0.2) | No catalyst, TBC (0.32) |

| | Example 15 | Example 16 | Example 17 | Example 18 | Comp. 4 | Comp. 5 | Comp. 6 |
|---|---|---|---|---|---|---|---|
| Color of solution at the time of mixing | Reddish brown | Reddish brown | Orange | Reddish brown | Reddish brown | Yellowish orange | Colorles 9 |
| Presence or absence of precipitation at the time of mixing | None | None | None | None | Very small | Very small | None |
| Time of production of solidification product | 7 days | 2 days | 1 day | - | 1 day | 1 day | - |

**[Table 3]**

| Isocyanate group-containing compound | TDI | | |
|---|---|---|---|
| Kinds of curing catalyst and the like (Amount of titanium alkoxide or amount of commercially available catalyst or the like relative to 100 parts by mass of TDI; parts by mass) | TTE+TEC (0.2) | TTE ONLY (0.2) | COMMERCIALLY AVAILABLE CATALYST (0.2) |

| | Example 19 | Comp. 7 | Comp. 8 |
|---|---|---|---|
| Color of solution at the time of mixing | Dark red | Reddish orange | Yellowish orange |
| Presence or absence of precipitation at the time of mixing | None | Very small | Very small |
| Time of production of solidification product | 2 weeks | 6 days | 6 days |

**[Table 4]**

| Isocyanate group-containing compound | IPDI | | | |
|---|---|---|---|---|
| Kinds of curing catalyst and the like (Amount of titanium alkoxide or amount of commercially available catalyst or the like relative to 100 parts by mass of IPDI; parts by mass) | TTE+TBC (0.4) | TTE+EHB (0.4) | TTE ONLY (0.4) | COMMERCIALLY AVAILABLE CATALYST (0.4) |

| | Example 20 | Example 21 | Comp. 9 | Comp. 10 |
|---|---|---|---|---|
| Color of solution at the time of mixing | Yellowish brown | Yellowish brown | Orange yellow | Pale yellow |
| Presence or absence of precipitation at the time of mixing | None | None | None | None |
| Time of production of solidification product | - | - | - | - |

### Examples 15 to 18

As shown in Table 2, in Examples 15 to 18, TTE as a titanium alkoxide of 0.2 parts by mass relative to 100 parts by mass of HDI, and a hydroxycarboxylic acid ester were used. In Example 18, the amounts of the titanium alkoxide and the hydroxycarboxylic acid ester used in Example 15 were changed. All the solutions of Examples 15 to 18 did not produce solidification products in a time less than one day. Furthermore, when a comparison was made between Examples 15 to 17 in which the kind of the hydroxycarboxylic acid ester was changed, Example 15 in which TBC was used as the hydroxycarboxylic acid ester did not produce a solidification product for the longest period (7 days). Furthermore, as shown in Table 2, in Example 18 in which the amounts of the titanium alkoxide and the hydroxycarboxylic acid ester were smaller than those of Example 15, a solidification product was not produced even after two weeks.

### Comparative Examples 4 and 5

Comparative Example 4 is different from Example 15 in the aspect that only a titanium alkoxide was incorporated as a curing catalyst, and no hydroxycarboxylic acid ester was added. The sample of Comparative Example 4 produced a solidification product in one day. In Comparative Example 5, a commercially available titanium-based curing catalyst (TC-750, manufactured by Matsumoto Fine Chemical Co., Ltd.) which contains mainly titanium isopropoxy bis (ethyl acetoacetate) as the organic titanium, was used as the curing catalyst instead of a titanium alkoxide and a hydroxycarboxylic acid ester. As shown in Table 2, the sample of Comparative Example 5 also produced a solidification product in one day.

### Comparative Example 6

Comparative Example 6 is different from Example 15 in the aspect that no titanium alkoxide was incorporated, and only TBC was incorporated as the hydroxycarboxylic acid ester. As shown in Table 2, since the sample of Comparative Example 6 contained only the hydroxycarboxylic acid ester, the sample did not produce a solidification product even after 7 days.

According to the results of Examples 15 to 18 and Comparative Examples 4 to 6, Examples 15 to 18 in which both the titanium alkoxide and the hydroxycarboxylic acid ester were added to HDI had higher storage stability of the curing catalyst-HDI solution as compared with Comparative Example 4 in which only the titanium alkoxide was added, or Comparative Example 5 in which an organic titanium was added. Particularly, when TTE was used as the titanium alkoxide and TBC was used as the hydroxycarboxylic acid ester (Examples 15 and 18), the curing catalyst-HDI solution had higher stability.

### Example 19

In Example 19, TDI was used as the isocyanate group-containing compound. Furthermore, in Example 19, TTE of 0.2 parts by mass relative to 100 parts by mass of TDI was used as the titanium alkoxide, and TBC was used as the hydroxycarboxylic acid ester. As shown in Table 3, in the sample of Example 19, it took two weeks till producing a solidification product after the preparation of the curing catalyst-TDI solution.

### Comparative Examples 7 and 8

Comparative Example 7 is different from Example 19 in the aspect that only a titanium alkoxide was incorporated in an amount of 0.2 parts by mass relative to 100 parts by mass of TDI, and TBC was not added. As shown in Table 3, Comparative Example 7 produced a solidification product after 6 days had passed from the preparation of the curing catalyst-TDI solution. Comparative Example 8 is different from Example 19 in the aspect that the titanium alkoxide and the hydroxycarboxylic acid ester were not used, and an organotitanium-based curing catalyst (TC-750, manufactured by Matsumoto Fine Chemical Co., Ltd.) was used in an amount of 0.2 parts by mass relative to 100 parts by mass of TDI. As shown in Table 3, Comparative Example 8 produced a solidification product after 6 days had passed from the time of preparation of the curing catalyst-TDI solution.

It was found from Example 19 and Comparative Examples 7, 8 that Example 19 in which both the titanium alkoxide and the hydroxycarboxylic acid ester were added to TDI, had higher stability of the curing catalyst-TDI solution as compared with Comparative Example 7 in which only the titanium alkoxide was added, or Comparative Example 8 in which an organic titanium was added.

### Examples 20 and 21

In Examples 20 and 21, IPDI was used as the isocyanate group-containing compound. Furthermore, in Examples 20 and 21, TTE was used as a curing catalyst in an amount of 0.4 parts by mass relative to 100 parts by mass of IPDI as the titanium alkoxide, and TBC and EHB were used as hydroxycarboxylic acid esters. In Examples 20 and 21, no solidification product was produced even after two weeks had passed from the time of preparation of the curing catalyst-IPDI solution.

### Comparative Examples 9 and 10

Comparative Example 9 is different from Examples 20, in the aspect that TTE of 0.4 parts by mass was only mixed with 100 parts by mass of IPDI, and no hydroxycarboxylic acid ester was added. Comparative Example 10 is different from Examples 20 and 21 in the aspect that an organotitanium-based curing catalyst (TC-750, manufactured by Matsumoto Fine Chemical Co., Ltd.) was used in an amount of 0.4 parts by mass relative to 100 parts by IPDI. In Comparative Examples 9 and 10, no solidification product was produced even after two weeks had passed from the time of preparation of the curing catalyst-IPDI solution.

From the above results, when both the titanium alkoxide and the hydroxycarboxylic acid ester are added as curing catalysts, time causing a solidification product of the curing catalyst-HDI solutions and the curing catalyst-TDI solutions was delayed as compared with the case of adding only the titanium alkoxide. That is, when both the titanium alkoxide and the hydroxycarboxylic acid ester were added, there was a tendency of obtaining superior storage stability of the isocyanate group-containing compound, as compared with the case of adding only the titanium alkoxide.

### (9) Method for measuring the change in curing time based on storage period of curing catalyst-isocyanate group-containing compound solution and results thereof

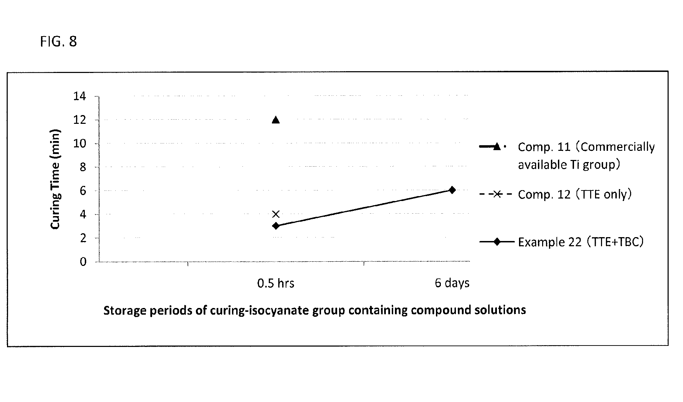

In a nitrogen-purged glove box, a curing catalyst-isocyanate group-containing compound solution was prepared in a screw tube having an inner volume of 35 ml, by adding a titanium alkoxide and a hydroxycarboxylic acid ester mixture to an isocyanate group-containing compound at the composition shown in Table 5. The molar ratio of the titanium alkoxide and the hydroxycarboxylic acid ester was adjusted to 1:1. The opening of the screw tube containing the curing catalyst-isocyanate group-containing compound solution was tightly sealed and stored for defined times at 25°C. After the respective defined times, a polyol was mixed into the curing catalyst-isocyanate group-containing compound solution, and the curing time taken after mixing the polyol to the curing was measured. The results are shown in FIGS. 8 to 15.

**[Table 5]**

| Polyol | Isocyanate group-containing compound | | Curing catalyst (parts by mass based on polyol) | Results |
|---|---|---|---|---|
| G-1000 | HDI | Example 22 | TTE(0.02)+TBC | FIG. 8 |
| | | Comp. 11 | Commercially available catalyst (0.02) | |
| | | Comp. 12 | TTE (0.02) | |
| G-1000 | TDI | Example 23 | TTE (0.05) +TBC | FIG. 9 |
| | | Comp. 13 | Commercially available catalyst (0.05) | |
| | | Comp. 14 | TTE (0.05) | |
| G-400 | IPDI | Example 24 | TTE (0.1) + TBC | FIG. 10 |
| | | Comp. 15 | Commercially available catalyst (0.1) | |
| | | Comp. 16 | TTE (0.1) | |
| F-2010 | HDI | Example 25 | TTE (0.2) + TBC | FIG. 11 |
| | | Comp. 17 | Commercially available catalyst (0.2) | |
| | | Comp. 18 | TTE (0.2) | |
| F-2010 | TDI | Example 26 | TTE (0.2) + TBC | FIG. 12 |
| | | Comp. 19 | Commercially available catalyst (0.2) | |
| | | Comp. 20 | TTE (0.2) | |
| H-102 | HDI | Example 27 | TTE (0.15) +TBC | FIG. 13 |
| | | Comp. 21 | Commercially available catalyst (0.15) | |
| | | Comp. 22 | TTE (0.15) | |
| H-102 | TDI | Example 28 | TTE (0.1) + TBC | FIG. 14 |
| | | Comp. 23 | Commercially available catalyst (0.1) | |
| | | Comp. 24 | TTE (0.1) | |
| H-102 | IPDI | Example 29 | TTE (0.3) +TBC | FIG. 15 |
| | | Comp. 25 | Commercially available catalyst (0.3) | |
| | | Comp. 26 | TTE (0.3) | |

### Example 22

In Example 22, a curing catalyst-HDI solution was prepared, in which HDI as an isocyanate group-containing compound, TTE as a titanium alkoxide of 0.02 parts by mass relative to 100 parts by mass of the polyol, and TBC as a hydroxycarboxylic acid ester were mixed. After the passage of 30 minutes and the passage of 6 days from preparing the curing catalyst-HDI solution, the period of curing time from mixing the curing catalyst-HDI solution with the polyol (G-1000) so as to obtain an isocyanate index of 1.05 to the curing was measured. In Example 22, the difference in the curing time between the case of the passage of 30 minutes and the case of the passage of 6 days was 3 minutes. As shown in FIG. 8, it was found that when both the titanium alkoxide and the hydroxycarboxylic acid ester were added, a sufficient curing catalyst capacity was maintained in the isocyanate group-containing compound.

### Comparative Examples 11 and 12

Comparative Example 11 is different from Example 22 in the aspect that a commercially available titanium-based curing catalyst (TC-750, manufactured by Matsumoto Fine Chemical Co., Ltd.) mainly containing titanium isopropoxy bis (ethyl acetoacetate) as an organic titanium was used instead of a titanium alkoxide and a hydroxycarboxylic acid ester in an amount of 0.02 parts by mass relative to 100 parts by mass of the polyol. Comparative Example 12 is different from Example 22 in the aspect that only a titanium alkoxide was incorporated in an amount of 0.02 parts by mass relative to 100 parts by mass of polyol and no hydroxycarboxylic acid ester was incorporated. Since the curing catalyst-HDI solution of Comparative Example 12 gelated in 2 days after the preparation of the curing catalyst solution, the data after the passage of 6 days from the preparation of the catalyst solution could not be obtained. Since the curing catalyst-HDI solution of Comparative Example 11 gelated after 5 days from the preparation of the curing catalyst solution, the data after the passage of 6 days from the preparation of the curing catalyst solution could not be obtained.

### Example 23

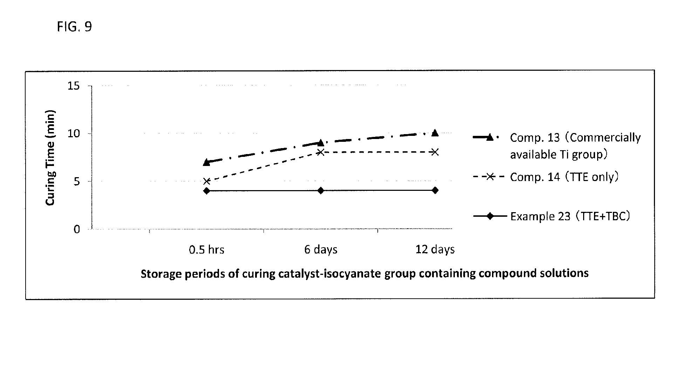

In Example 23, a curing catalyst-TDI solution was prepared, in which TDI as an isocyanate group-containing compound, TTE as a titanium alkoxide of 0.05 parts by mass relative to 100 parts by mass of the polyol, and TBC as a hydroxycarboxylic acid ester were mixed. After the passages of 30 minutes, 5 days and 12 days respectively from preparing the curing catalyst-TDI solution, the period of curing time from mixing the curing catalyst-TDI solution with a polyether-based polyol (G-1000) so as to obtain an isocyanate index of 1.05 to the curing was measured.
As shown in FIG. 9, in Example 23, the curing time in all cases of after the passages of 30 minutes, 5 days and 12 days from the preparation of the curing catalyst-TDI solution was 4 minutes, and there was no difference in the curing time.

### Comparative Examples 13 and 14

Comparative Example 13 is different from Example 23 in the aspect that an organotitanium-based curing catalyst (TC-750, manufactured by Matsumoto Fine Chemical Co., Ltd.) of 0.05 parts by mass relative to 100 parts by mass of the polyol was used instead of a titanium alkoxide and a hydroxycarboxylic acid ester. Comparative Example 14 is different from Example 23 in the aspect that only the titanium alkoxide as a curing catalyst was incorporated in an amount of 0.05 parts by mass relative to 100 parts by mass of the polyol, and no hydroxycarboxylic acid ester was incorporated. In Comparative Example 13, in the cases of after the passages of 30 minutes, 5 days and 12 days from the preparation of the curing catalyst-TDI solution, the periods of curing time taken from the mixing of the polyol with the curing catalyst solution to the curing were 7 minutes, 9 minutes and 10 minutes, respectively. However, Comparative Example 13 resulted in the generation of a precipitation after the passage of 10 days from the preparation of the curing catalyst-TDI solution. In Comparative Example 13, in the cases of after the passages of 30 minutes, 5 days and 12 days from the preparation of the curing catalyst-TDI solution, the periods of curing time taken from the mixing the polyol with the curing catalytic solution to the curing were 5 minutes, 8 minutes and 8 minutes, respectively. However, Comparative Example 14 resulted in the generation of a precipitation after the passage of 5 days from the preparation of the curing catalyst-TDI solution.

According to the result shown in FIG. 9, it was found that when both the titanium alkoxide and the hydroxycarboxylic acid ester were stored in an isocyanate group-containing compound, the storage stability of the curing catalyst capacity was superior as compared with the case of using only a titanium alkoxide or with the case of using an organotitanium-based curing catalyst.

### Example 24

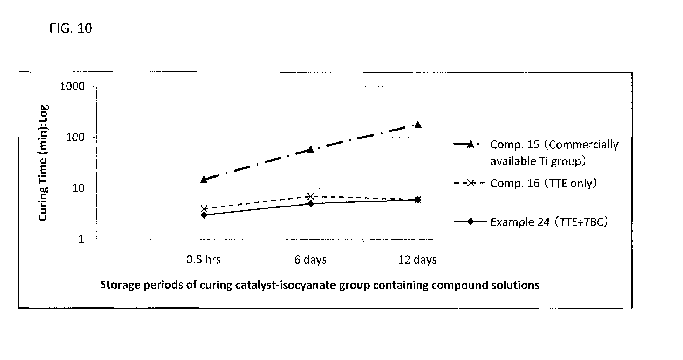

In Example 24, a curing catalyst-IPDI solution was prepared by mixing IPDI as an isocyanate group-containing compound, TTE as a titanium alkoxide of 0.1 parts by mass relative to 100 parts by mass of the polyol, and TBC as a hydroxycarboxylic acid ester. After the passages of 30 minutes, 6 days and 12 days respectively from preparing the curing catalyst-IPDI solution, the period of curing time from mixing the curing catalyst-IPDI solution with a glycerin-polyether-based polyol (G-400) so as to obtain an isocyanate index of 1.05 to curing was measured. As shown in FIG. 10, in Example 24, for each of the samples taken after the passages of 30 minutes, 6 days and 12 days from the preparation of the curing catalyst-IPDI solution, the periods of curing time taken from immediately after the mixing of the polyol with the curing catalyst solution to the curing were 3 minutes, 5 minutes and 6 minutes, respectively.

### Comparative Examples 15 and 16

Comparative Example 15 is different from Example 24 in the aspect that an organotitanium-based curing catalyst (TC-750, manufactured by Matsumoto Fine Chemical Co. Ltd.) of 0.1 parts by mass relative to 100 parts by mass of the polyol was used instead of a titanium alkoxide and a hydroxycarboxylic acid ester. Comparative Example 16 is different from Example 24 in the aspect that only a titanium alkoxide was used in an amount of 0.1 parts by mass relative to 100 parts by mass of the polyol, and no hydroxycarboxylic acid ester was incorporated. In Comparative Example 15, for each of the samples taken after the passages of 30 minutes, 6 days and 12 days from the preparation of the curing catalyst-IPDI solution, the periods of curing time taken from immediately after the mixing of the polyol with the curing catalyst to the curing were 15 minutes, 58 minutes and 180 minutes, respectively. In Comparative Example 16, for each of the samples taken after the passages of 30 minutes, 6 days and 12 days from the preparation of the curing catalyst-IPDI solution, the periods of curing time taken from immediately after the mixing of the polyol with the curing catalyst solution to the curing were 4 minutes, 7 minutes and 6 minutes, respectively.

According to the result shown in FIG. 10, it was found that the curing catalyst solution made with both the titanium alkoxide and the hydroxycarboxylic acid ester being mixed with the isocyanate group-containing compound, the curing catalyst capacity for storage period showed a satisfactory state or an equivalent state as compared with the case of using only a titanium alkoxide, and the storage stability of it was superior as compared with the case of using an organotitanium-based curing catalyst.

### Example 25

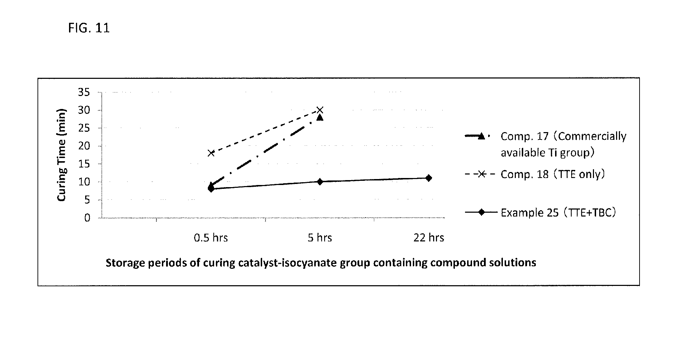

In Example 25, a curing catalyst-HDI solution was prepared, in which HDI as an isocyanate group containing compound, TTE as a titanium alkoxide of 0.2 parts by mass relative to 100 parts by mass of the polyol, and TBC as a hydroxycarboxylic acid ester were mixed. After the passages of 30 minutes, 5 hours and 20 hours respectively from preparing the curing catalyst-HDI solution, the solution was mixed with a polyol (F-2010) so as to obtain an isocyanate index of 1.05. As shown in FIG. 11, in Example 25, for each of the samples taken after the passages of 30 minutes, 5 hours and 20 hours from the preparation of the curing catalyst-HDI solution, the periods of curing time taken from immediately after the mixing of the polyol to with the curing catalyst solution to the curing were 8 minutes, 10 minutes and 11 minutes, respectively.

### Comparative Examples 17 and 18

Comparative Example 17 is different from Example 25 in the aspect that an organotitanium-based curing catalyst (TC-750, manufactured by Matsumoto Fine Chemical Co., Ltd.) of 0.2 parts by mass relative to 100 parts by mass of the polyol was used instead of a titanium alkoxide and a hydroxycarboxylic acid ester. Comparative Example 18 is different from Example 25 in the aspect that only a titanium alkoxide is incorporated in an amount of 0.2 parts by mass relative to 100 parts by mass of the polyol, and no hydroxycarboxylic acid ester was incorporated. In Comparative Example 17, for each of samples taken after the passages of 0.5 hours and 5 hours from the preparation of the curing catalyst-HDI solution, the periods of curing time taken immediately after mixing the polyol with the curing catalyst solution were 18 minutes and 30 minutes, respectively. Since Comparative Example 18 started to gelate after the passage of 5 days from the preparation of the curing catalyst-HDI solution, the curing time after the passage of 22 hours could not be obtained. In Comparative Example 18, for each of samples taken after the passages of 0.5 hours and 5 hours from the preparation of the curing catalyst-HDI solution, the periods of curing time taken from immediately after the mixing of the polyol with the curing catalyst solution to the curing were 9 minutes and 28 minutes, respectively. Since Comparative Example 18 gelated within 10 hours from the preparation of the curing catalyst-HDI solution, the data after the passage of 22 hours could not be obtained.

According to the result shown in FIG. 11, it was found that when both the titanium alkoxide and the hydroxycarboxylic acid ester were stored in the isocyanate group-containing compound, the storage stability of the curing catalyst capacity was superior as compared with the case of using only a titanium alkoxide, or the case of using an organotitanium-based curing catalyst.

### Example 26

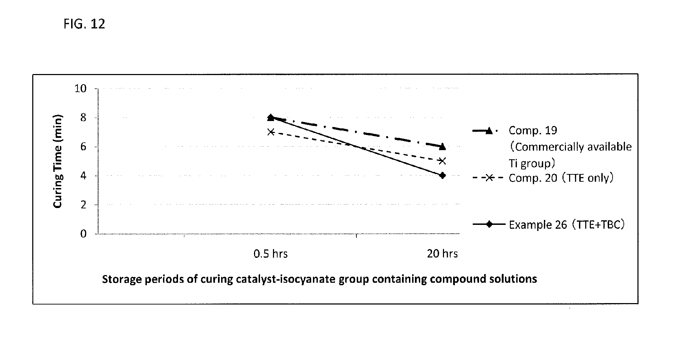

In Example 26, a curing catalyst-TDI solution was prepared, in which TDI as an isocyanate group-containing compound, TTE as a titanium alkoxide of 0.2 parts by mass relative to 100 parts by mass of the polyol, and TBC as a hydroxycarboxylic acid ester were mixed. Each of the samples taken after the passages of 30 minutes and 20 hours from the preparation of the curing catalyst-TDI solution was mixed with F-2010 as a polyol so as to obtain an isocyanate index of 1.05, and the period of curing time from immediately after the mixing of the polyol with the curing catalyst solution to the curing was measured. As shown in FIG. 12, in Example 26, for each of the samples taken after the passages of 30 minutes and 20 hours from the preparation of the curing catalyst-TDI solution, the periods were 8 minutes and 4 minutes, respectively.

### Comparative Examples 19 and 20

Comparative Example 19 is different from Example 26 in the aspect that an organotitanium-based curing catalyst (TC-750, manufactured by Matsumoto Fine Chemical Co., Ltd.) of 0.2 parts by mass relative to 100 parts by mass of the polyol was used instead of a titanium alkoxide and a hydroxycarboxylic acid ester. Comparative Example 20 is different from Example 26 in the aspect that only a titanium alkoxide was incorporated in an amount of 0.2 parts by mass relative to 100 parts by mass of the polyol, and no hydroxycarboxylic acid ester was incorporated. In Comparative Example 19, for each of the samples taken after the passages of 0.5 hours and 20 hours from the preparation of the curing catalyst-TDI solution, the periods of curing time taken from the mixing the polyol with the curing catalyst solution to the curing were 8 minutes and 6 minutes, respectively. In Comparative Example 20, for each of the samples taken after the passages of 0.5 hours and 5 hours from the preparation of the curing catalyst-TDI solution, the periods of curing time taken from immediately after the mixing the polyol with the curing catalyst solution to the curing were 7 minutes and 5 minutes, respectively.

### Example 27

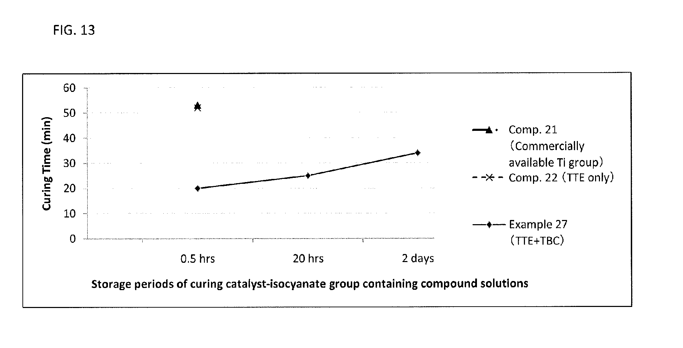

In Example 27, a curing catalyst-HDI solution was prepared using HDI as an isocyanate group-containing compound, TTE as a titanium alkoxide of 0.15 parts by mass relative to 100 parts by mass of the polyol, and TBC as a hydroxycarboxylic acid ester. After the passages of 0.5 hours, 20 hours and 2 days from the preparation of the curing catalyst-HDI solution, the solution was mixed with a castor oil-based polyol (H-102) as a polyol so as to obtain an isocyanate index of 1.05, and the period of curing time taken from immediately after the mixing the polyol with the curing catalyst solution to the curing was measured. As shown in FIG. 13, in Example 27, for each of samples taken after the passages of 0.5 hours, 20 hours and 2 days from the preparation of the curing catalyst-HDI solution, the periods were 20 minutes, 25 minutes and 34 minutes, respectively.

### Comparative Examples 21 and 22

Comparative Example 21 is different from Example 27 in the aspect that an organotitanium-based curing catalyst (TC-750, manufactured by Matsumoto Fine Chemical Co., Ltd.) of 0.15 parts by mass relative to 100 parts by mass of the polyol was used instead of a titanium alkoxide and a hydroxycarboxylic acid ester. Comparative Example 22 is different from Example 27 in the aspect that only a titanium alkoxide was incorporated in an amount of 0.15 parts by mass relative to 100 parts by mass of the polyol, and no hydroxycarboxylic acid ester was incorporated. In Comparative Examples 21 and 22, since the curing catalyst solutions gelated within 20 hours from the preparation of the curing catalyst-HDI solution, the data after the passage of 20 hours could not be obtained.

### Example 28

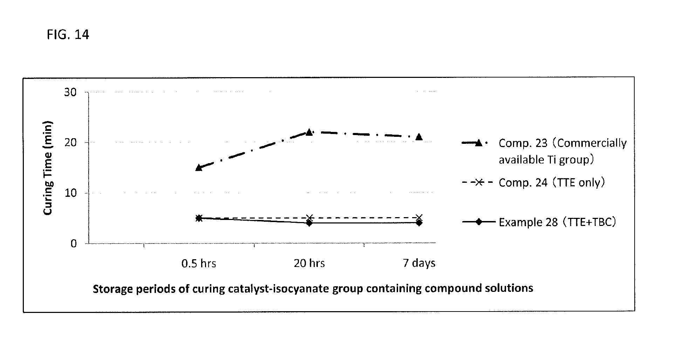

In Example 28, a curing catalyst-TDI solution was prepared using TDI as an isocyanate group-containing compound, TTE as a titanium alkoxide of 0.1 parts by mass relative to 100 parts by mass of the polyol, and TBC as a hydroxycarboxylic acid ester. After the passages of 0.5 hours, 20 hours and 7 days from the preparation of the curing catalyst-TDI solution, the solution was mixed with H-102 as a polyol so as to obtain an isocyanate index of 1.05, and the period of curing time taken from immediately after the mixing the polyol with the curing catalyst solution to the curing was measured. As shown in FIG. 14, in Example 28, for each of the samples taken after the passages of 0.5 hours, 20 hours and 7 days from the preparation of the curing catalyst-TDI solution, the periods were 5 minutes, 4 minutes and 4 minutes, respectively. Furthermore, the curing catalyst-TDI solution of Example 28 didn't cure even at a time point where 30 days had passed from the preparation of the curing catalyst-TDI solution. After 30 days had passed from the preparation of the curing catalyst-TDI solution of Example 28, H-102 was added to the solution, and the period of curing time was 5 minutes.

### Comparative Examples 23 and 24

Comparative Example 23 is different from Example 28 in the aspect that an organotitanium-based curing catalyst (TC-750, manufactured by Matsumoto Fine Chemical Co., Ltd.) of 0.1 parts by mass relative to 100 parts by mass of the polyol was incorporated instead of a titanium alkoxide and a hydroxycarboxylic acid ester. Comparative Example 24 is different from Example 28 in the aspect that only a titanium alkoxide was incorporated in an amount of 0.1 parts by mass relative to 100 parts by mass of the polyol, and no hydroxycarboxylic acid ester was incorporated. In Comparative Example 23, for each of the samples taken after the passages of 0.5 hours, 20 hours and 7 days from the preparation of the curing catalyst-TDI solution, the periods of curing time taken from immediately after the mixing of the polyol with the curing catalyst solution were 15 minutes, 22 minutes, and 21 minutes, respectively. Furthermore, the curing catalyst-TDI solution of Comparative Example 23 resulted in the generation of a precipitation within 7 days from the preparation of the curing catalyst-TDI solution. In Comparative Example 24, for each of the samples after the passages of 0.5 hours, 20 hours and 7 days from the preparation of the curing catalyst-TDI solution, the periods of curing time were 5 minutes in all cases. However, Comparative Example 24 resulted in the generation of a precipitation within 7 days from the preparation of the curing catalyst-TDI solution.

According to the result shown in FIG. 14, it was found that when both the titanium alkoxide and the hydroxycarboxylic acid ester were stored in the isocyanate group-containing compound, the curing catalyst capacity slightly enhanced, and the storage stability of the curing catalyst capacity was superior as compared with the case of using an organotitanium-based curing catalyst.

### Example 29

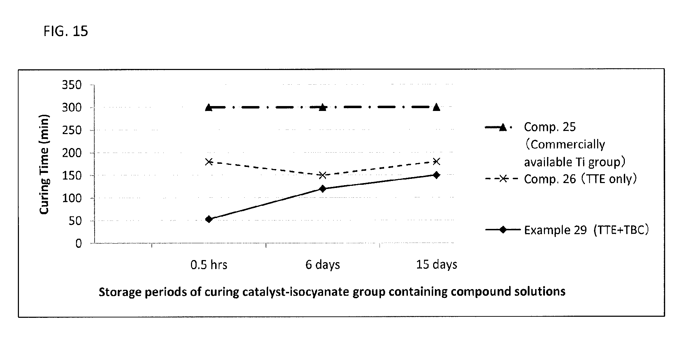

In Example 29, a curing catalyst-IPDI solution was prepared using IPDI as an isocyanate group-containing compound, TTE as a titanium alkoxide of 0.3 parts by mass relative to 100 parts by mass of the polyol, and TBC as a hydroxycarboxylic acid ester. After the passages of 0.5 hours, 6 days and 15 days from the preparation of the curing catalyst-IPDI solution, the solution was mixed with a castor oil-based polyol (H-102) as a polyol so as to obtain an isocyanate index of 1.05, and the period of curing time taken from immediately after the mixing the curing catalyst solution with the polyol to the curing was measured. As shown in FIG. 15, in Example 29, for each of the samples after the passages of 0.5 hours, 6 days and 15 days from the preparation of the curing catalyst-IPDI solution, the periods were 53 minutes, 120 minutes and 150 minutes, respectively.

### Comparative Examples 25 and 26

Comparative Example 25 is different from Example 29 in the aspect that an organotitanium-based curing catalyst (TC-750, manufactured by Matsumoto Fine Chemical Co., Ltd.) of 0.3 parts by mass relative to 100 parts by mass of the polyol was used instead of a titanium alkoxide and a hydroxycarboxylic acid ester. Comparative Example 26 is different from Example 29 in the aspect that only a titanium alkoxide was incorporated in an amount of 0.3 parts by mass relative to 100 parts by mass of the polyol, and no hydroxycarboxylic acid ester was incorporated. In Comparative Example 25, for each of the samples taken after the passages of 0.5 hours, 6 days and 15 days from the preparation of the curing catalyst-IPDI solution, the period of curing time taken from immediately after the mixing of the polyol with the curing catalyst solution to the curing was 300 minutes in all cases. In Comparative Example 26, for each of the samples taken after the passages of 0.5 hours, 6 days and 15 days from the preparation of the curing catalyst-IPDI solution, the periods of curing time taken from immediately after the mixing of the polyol with the curing catalyst solution to the curing were 180 minutes, 150 minutes and 180 minutes, respectively.

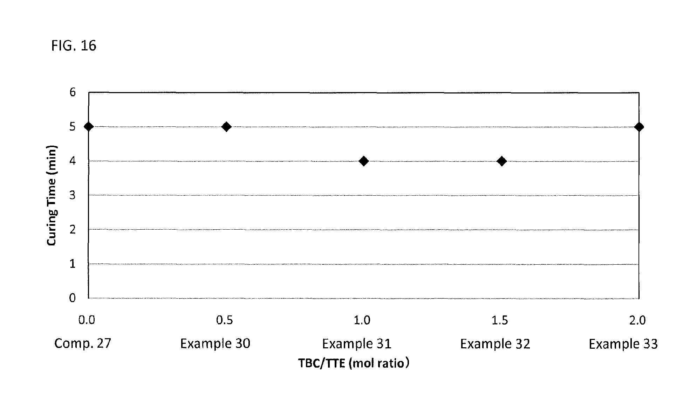

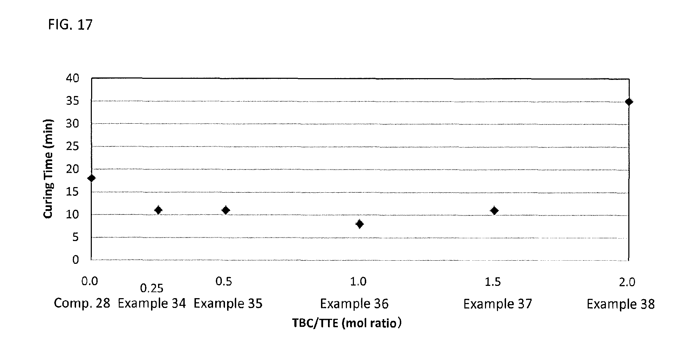

Next, the change in the curing catalyst capacity with the mixing ratio of the titanium alkoxide and the hydroxycarboxylic acid ester was measured. Specifically, various curing catalyst-isocyanate group-containing compound solutions were prepared using the isocyanate group-containing compounds and polyols, and using TBC at a varying molar ratio with respect to TTE as shown in Table 6. Immediately after the curing catalyst-isocyanate group-containing compound solutions were prepared, the polyols shown in Table 6 were incorporated, and then the period of curing time was measured. The results for the cases of using TDI and IPDI as the isocyanate group-containing compound are shown in FIG. 16 and FIG. 17, respectively.

**[Table 6]**

| | TBC/TTE (mol ratio) | Isocyanate group-containing compound | Polyol |
|---|---|---|---|
| Comp. 27 | 0.0 | TDI | G-1000 |
| Example 30 | 0.5 | | |
| Example 31 | 1.0 | | |
| Example 32 | 1.5 | | |
| Example 33 | 2.0 | | |
| Comp. 28 | 0.0 | IPDI | G-400 |
| Example 34 | 0.25 | | |
| Example 35 | 0.5 | | |
| Example 36 | 1.0 | | |
| Example 37 | 1.5 | | |
| Example 38 | 2.0 | | |

### Examples 30 to 33 and Comparative Example 27

In Examples 30 to 33 and Comparative Example 27, a polyol (G-1000) was incorporated so as to obtain an isocyanate index of 1.05. TTE was used in an amount of 0.05 parts by mass relative to 100 parts by mass of the polyol. As shown in FIG. 16, when TDI was used as an isocyanate group-containing compound, and G-1000 was used as a polyol, the curing time was shortened when the ratio of the hydroxycarboxylic acid ester to the titanium alkoxide was close to 1:1.

### Examples 34 to 38 and Comparative Example 28

In Examples 34 to 38 and Comparative Example 28, a polyol (G-400) was incorporated so as to obtain an isocyanate index of 1.05. TTE was used in an amount of 0.01 parts by mass relative to 100 parts by mass of the polyol. As shown in FIG. 17, when IPDI was used as an isocyanate group-containing compound, and G-400 was used as a polyol, the curing time was shortest in the case where the molar ratio of the hydroxycarboxylic acid ester to the titanium alkoxide was 1. Furthermore, when the molar ratio of the hydroxycarboxylic acid ester to the titanium alkoxide was 0.5 or less and 1.5 or more, the curing time tended to increase, and particularly when the molar ratio of the hydroxycarboxylic acid ester to the titanium alkoxide was 2, the curing time increased to a large extent.

### Industrial Applicability

The present invention can be used in, for example, coating materials, adhesives, sealing materials, and the like.

## Claims

1. A curable urethane composition comprising:
(A) an isocyanate group-containing compound;
(B) a polyol; and
as curing catalysts,
(C) a titanium alkoxide; and
(D) an alpha- or beta-hydroxycarboxylic acid ester.

2. The curable urethane composition according to claim 1, wherein the (D) alpha- or beta-hydroxycarboxylic acid ester is a citric acid ester.

3. The curable urethane composition according to claim 1 or 2, wherein the (C) titanium alkoxide is titanium tetra-ortho-ethoxide.

4. A cured product obtainable by curing the curable urethane composition according to any one of claims 1 to 3.

5. A kit comprising:
(A) an isocyanate group-containing compound;
(B) a polyol; and
as curing catalysts,
(C) a titanium alkoxide; and
(D) an alpha- or beta-hydroxycarboxylic acid ester, wherein
the (A) isocyanate group-containing compound is separated from the (B) polyol, and
the (C) titanium alkoxide is included, together with the (D) alpha- or beta-hydroxycarboxylic acid ester, in at least one of the component (A) or the component (B), or the (C) titanium alkoxide is separated from the components (A) and (B).

6. A method for producing a cured product, comprising:
a first mixing step of mixing an isocyanate group-containing compound with a titanium alkoxide and an alpha- or beta-hydroxycarboxylic acid ester;
a second mixing step of mixing the mixed solution obtained in the first mixing step with a polyol; and
a curing step of curing the composition obtained in the second mixing step.
